# EUROPEAN PATENT SPECIFICATION

(11) **EP 2 503 660 B1**
(45) Date of publication and mention of the grant of the patent: **21.01.2015**
(21) Application number: 12160833.5
(22) Date of filing: 22.03.2012
(51) Int. Cl.: H02J 5/00, H02J 7/02

(54) **Method for controlling power in wireless power transmission assembly and wireless power assembly thereof**
Verfahren zur Steuerung der Leistung in einer drahtlosen Leistungsübertragungsanordnung und drahtlose Leistungsanordnung dafür
Procédé pour réguler la puissance d'un ensemble de transmission de puissance sans fil et son ensemble de puissance sans fil

(30) Priority: 24.03.2011 KR 20110026500
(43) Date of publication of application: 26.09.2012
(73) Proprietor: Hanrim Postech Co., Ltd, Suwon-si, Gyeonggi-do (KR)
(72) Inventor: Jung, Chun-Kil, Seoul (KR); Kuk, Yoon-Sang, Gwacheon-si, Gyeonggi-do (KR)
(74) Representative: Zardi, Marco

(56) References cited:
- WO-A1-2009/017783
- WO-A1-2010/035545
- US-A1- 2008 197 802
- US-A1- 2009 121 675
- US-A1- 2010 084 918

## Description

### BACKGROUND

### Field

The following description relates to a power control method in a wireless power transmission assembly that reduces a manufacturing cost by reducing the number of components, and a wireless power transmission assembly.

### Description of the Related Art

Generally, a battery pack received an electric power from an external charging device and supplies the power for operating a portable terminal including a mobile phone and a Personal Digital Assistant (PDA) in a charged state. The battery pack includes a battery cell for charging the electric energy and a circuit for charging and discharging the battery cell, i. e. supplying the electric energy to a portable terminal.

An electrical connection method of the battery pack and the charging device for charging the electric energy to the battery pack used in the portable terminal includes a terminal supplying method for receiving the commercial electricity, converting the commercial electricity into voltage and current corresponding to the battery pack, and supplying the electric energy to the battery pack via the terminal of the corresponding battery pack.

However, when the power is supplied by the terminal supplying method, there is a problem that an instantaneous discharge phenomenon occurs since both terminals of the battery pack and the charging device have different potential differences when the charging device and the battery pack contact with or are separated from each other.

Particularly, when foreign objects are stacked up on both terminals due to the instantaneous discharge phenomenon, a fire may break out.

There are also problems that the electric energy charged in the battery pack is naturally discharged to an outside via the terminal of the battery pack due to moisture to cause reduction of a lifespan and deterioration of performance of the battery pack.

Recently, controlling methods and charging systems of a non-contact type using a wireless power transmission method have been suggested to solve the above-mentioned problems.

US2010/084918 A1 discloses a method of detecting the presence of an object, identifying whether the object is a valid device and restricting power if its not a valid device. WO 2010/035545 A1 discloses that in a power transmitting terminal, a recharging control section outputs an alternating current signal of a recharging control voltage, corresponding to a recharging control signal. US 2011/169446 A1 discloses that a primary-side signal processing unit acquires a reception signal on the basis of a voltage at the power transmission unit at the time of load modulation communication and sets the charging control signal on the basis of reference information included in the reception signal.

### SUMMARY

The invention is defined by the appended claims. An embodiment of the present document is to provide a power control method in a wireless power transmission assembly that reduces a manufacturing cost by reducing the number of components and increases wireless power transmission efficiency, and a wireless power transmission assembly.

To achieve the embodiment of the present document, provided is a method for controlling a power in a wireless power transmission assembly, the method including: outputting a direct current voltage to wireless power transmission apparatus, the direct current voltage generated from an alternative power source in an adaptor; and changing the size of the direct current voltage in the adaptor based on a voltage changed communication signal if the wireless power transmission apparatus transmits the voltage change communication signal to the adaptor.

The adaptor and the wireless power transmission apparatus may be connected by a plus line, a ground line, and a communication line, and the step of changing the size of the direct current voltage in the adaptor based a voltage changed communication signal if the wireless power transmission apparatus transmits the voltage change communication signal to the adaptor, may include changing the size of the direct current voltage in the adaptor based on an amplitude modulation signal or a serial communication signal, the amplitude modulation signal or the serial communication signal transmitted through the communication line.

The voltage change communication signal may include at least one of a power up signal and a power down signal based on a charging state signal from a wireless power receiving apparatus.

The wireless power transmission apparatus may include a first transmission coil and a second transmission coil, and the method may further include: detecting a wireless power receiving apparatus through anyone of the first transmission coil and the second transmission coil; and transmitting the voltage change communication signal through the detecting transmission coil.

The adaptor and the wireless power transmission apparatus may be connected by a plus line a ground line, and the step of changing the size of the direct current voltage in the adaptor based on a voltage changed communication signal if the wireless power transmission apparatus transmits the voltage change communication signal to the adaptor, may include transmitting a voltage up signal or a voltage down single through the plus line in a way of DC modulation.

The step of changing the size of the direct current voltage in the adaptor based on a voltage changed communication signal if the wireless power transmission apparatus transmits the voltage change communication signal to the adaptor, may include changing the size of the direct current voltage by adjusting an offset voltage of the adaptor.

To achieve another embodiment of the present document, provided is a wireless power transmission assembly, including an adaptor configured to change an alternative current power source to a direct current voltage and to output the direct current voltage; and a wireless power transmission apparatus configured to transmit a wireless power signal by using the direct current voltage outputted from the adaptor, wherein a transmission controller of the wireless power transmission apparatus is configured to transmit a voltage change communication signal to the adaptor, the voltage change communication transmitted from the wireless power transmission apparatus connected to the adaptor and to change the size of the direct current voltage in the adaptor based on a voltage changed communication signal.

The adaptor and the wireless power transmission apparatus may be connected by a plus line, a ground line, and a communication line, and the transmission controller is configured to transmit an amplitude modulation signal or a serial communication signal transmitted through the communication line, and to change the size of the direct current voltage in the adaptor based on the amplitude modulation signal or the serial communication signal.

The adaptor may include: a communication controller configured to receive the voltage change communication signal; and an output voltage controller configured to control the direct voltage by receiving the voltage change communication signal from the communication controller.

The voltage change communication signal may include at least one of a power up signal and a power down signal based on a charging state signal from a wireless power receiving apparatus.

The assembly wireless power transmission apparatus may include a first transmission coil and a second transmission coil, and the transmission controller may be configured to detect a wireless power receiving apparatus through anyone of the first transmission coil and the second transmission coil, and to transmit the voltage change communication signal through the detecting transmission coil.

The transmission controller may be configured to detect the wireless power receiving apparatus through the load modulation of the first transmission coil and the second transmission coil.

The adaptor and the wireless power transmission apparatus are connected by a plus line and a ground line, and the transmission controller is configured to transmit a voltage up signal or a voltage down single through the plus line in a way of DC modulation.

The transmission controller may change the size of the direct current voltage by adjusting an offset voltage of the adaptor.

According to an exemplary embodiment of the present document, when the output voltage from the adaptor is controlled directly by the wireless power transmission device, a manufacturing cost may be decreased by reducing the number of components and the wireless power transmission efficiency may be increased.

### BRIEF DESCRIPTION OF THE DRAWINGS

FIG. 1a is a block diagram showing a wireless power transmission system according to an exemplary embodiment.

FIG. 1b is a block diagram showing an adaptor of a wireless power transmission assembly according to an exemplary embodiment.

FIG. 2 is a flowchart describing a power control method in the wireless power transmission assembly according to an exemplary embodiment.

FIG. 3a is a view showing a connection relation of the adaptor and a wireless power transmission device of the wireless power assembly according to an exemplary embodiment.

FIG. 3b is a view showing a connection relation of the adaptor and the wireless power transmission device of the wireless power assembly according to another exemplary embodiment.

FIG. 4a is a view showing a structure of the plurality of coils used in the wireless power transmission device according to an exemplary embodiment.

FIG. 4b is a view showing a structure of the plurality of coils used in the wireless power transmission device according to another exemplary embodiment.

FIG. 5a is a plan view showing a shield core accommodating a plurality of coils used in the wireless power transmission device according to an exemplary embodiment.

FIG. 5b is a perspective view showing the shield core accommodating the plurality of coils used in the wireless power transmission device according to another exemplary embodiment.

### DETAILED DESCRIPTION

Hereinafter, a method for selectively controlling a power transmission coil in a wireless power transmission device, and a wireless power transmission device thereof will be described in detail with reference to the accompanying drawings. The suffixes "module", "-er" and "-or" used in the detailed description are given to the constituent elements to take advantage of the ease in writing the description. The suffixes may be alternatively used and do not have a distinct difference or role in themselves.

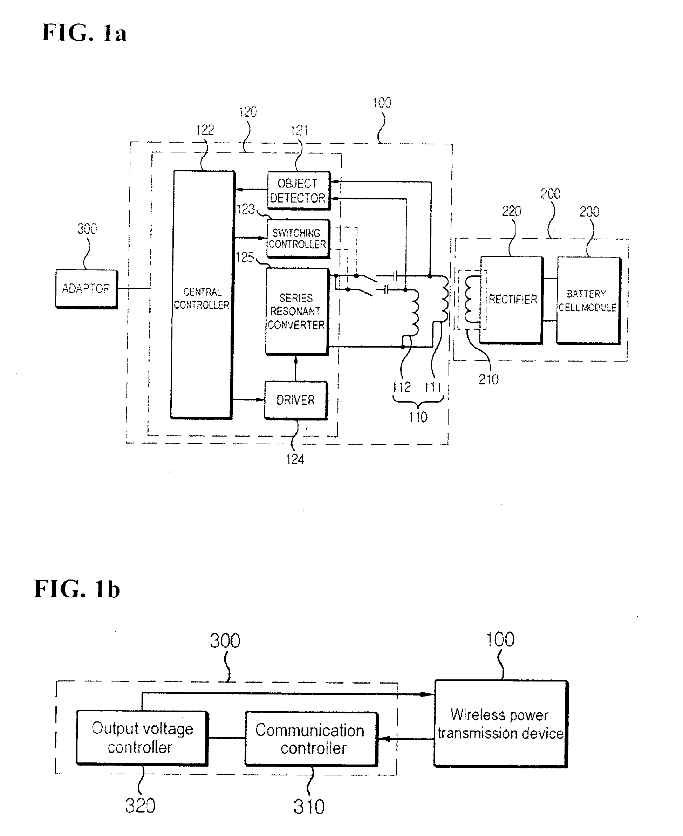

FIG. 1a is a block diagram showing a wireless power transmission system according to an exemplary embodiment.

As shown in FIG. 1, the wireless power transmission system according to an exemplary embodiment includes a wireless power transmission assembly including a wireless power transmission device 100 and an adaptor(AC/DC converter) 300, and a wireless power receiving device 200. That is, based on electromagnetic induction, when the wireless power transmission apparatus 100 changes a direct current (DC) voltage received via the adaptor 300 into a wireless power signal and transmits the wireless power signal to the wireless power receiving device 200, the wireless power receiving apparatus 200 receiving the wireless power signal charges a battery with power of the wireless power signal or supplies the power to electronic equipments connected to the wireless power receiving apparatus 200.

Hereinafter, each configuration of the wireless power transmission apparatus 100 and the wireless power receiving apparatus 200 will be described.

The wireless power transmission apparatus 100 according to an exemplary embodiment includes a transmission coil 110 and a transmission controller 120. The transmission coil 110 primary coil is a device for transmitting a power signal to a reception coil 210 of the wireless power receiving apparatus 200 according to the electromagnetic induction. According to this exemplary embodiment, two coils including a first transmission coil 111 and a second transmission coil 112 may be adopted.

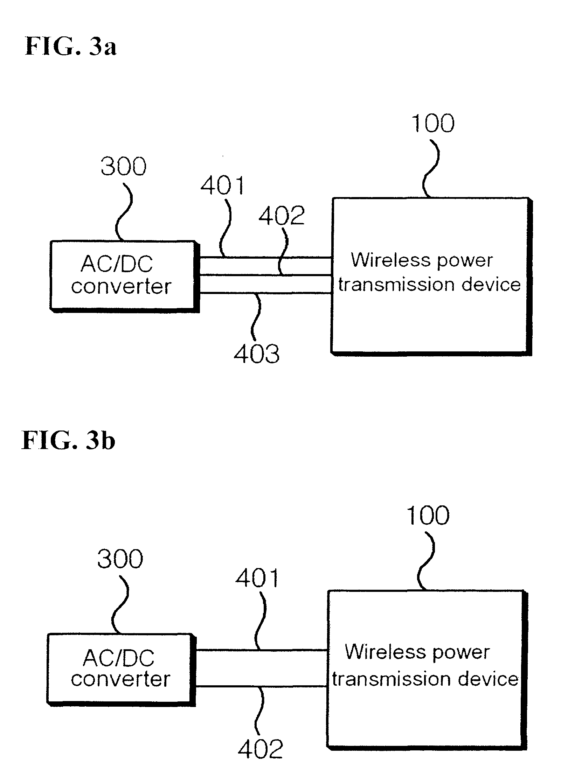

Configurations of the first transmission coil 111 and the second transmission coil 112 will be described in detail with reference to FIG. 3.

With reference to FIG. 1 again, the transmission controller 120 for controlling the transmission coil 110 may include an object detector 121, a central controller 122, a switching controller 123, a driver 124 and a series resonant converter 125.

The object detector 121 detects a load change of the transmission coil 110 as the primary coil, determines whether an object detected by the corresponding load change is The wireless power receiving apparatus 200, i.e., functions as an identification (ID) checker, and filters and processes a charging state signal transmitted from the wireless power receiving apparatus 200. That is, when an ID signal as a response signal to an ID call signal transmitted via the transmission coil 110 is received, the object detecting unit 121 filters and processes the ID signal, and then filters and processes a charging state signal transmitted via the transmission coil 110.

The central controller 122 receives and checks the determination result of the object detector 121, analyzes a charging state signal and an ID check signal received from the transmission coil 110 and transmits a power signal for transmitting a wireless power signal via the transmission coil 110 to the driver 124. Also, the central controller 122 transmits a voltage change communication signal to the adaptor 300 to control an output voltage of the adaptor described below.

That is, the central controller 122 analyzes and processes a data signal filtered in the object detector 121 and correspondingly controls the driver 124, and controls an output voltage of the adaptor.

The switching controller 123 controls switching operation a switch between the first transmission coil 111 and the second transmission coil 112 and the series resonant converter 125.

The driver 124 controls the operation of the series resonant converter 125 by controlling the central controller 122.

The series resonant converter 125 generates the transmission power for generating a power signal to be transmitted by controlling the driver 124 and supplies the transmission power to the primary core 110. In other words, when the central controller 122 transmits the power controlling signal for transmitting a power signal with a required power value to the driver 124 the driver 124 controls the operation of the series resonant converter 125 correspondingly to the transmitted power controlling signal. Also, the series resonant converter 125 applies the transmission power corresponding to the required power value to the primary core 110 by controlling the driver 124 to transmit a wireless power signal with a required strength. A size of the generated wireless power signal may be controlled by the output voltage of the adaptor 300. The transmission controller 120 changes the output voltage of the adaptor 300 by transmitting the voltage change communication signal to the adaptor 300 via a cable or tirelessly.

In addition, the series resonant converter 125 supplies the power for generating a first object detecting signal and a second object detecting signal via each of the first transmission coil 111 and the second transmission coil 112 by controlling the driver 124.

The wireless power receiving apparatus 200 receiving the power by receiving a power signal includes a reception coil 210, a rectifier 220, and a battery cell module 230. The reception coil 210 generates an induced power by the transmitted power signal. The rectifier 220 rectifies the induced power. The battery cell module 230 charges the battery cell with the rectified power.

The battery cell module 230 includes protection circuits such as a temperature detecting circuit, and over voltage and over current prevention circuits. The battery cell module 230 also includes a charging management module for collecting and processing information on a charging state of the battery cell.

The adaptor 300 is a device for converting an AC commercial power of 220V or 110V into a DC voltage of a variable voltage. As described above, the adaptor 300 changes an output voltage by adjusting an offset voltage by a voltage change request signal of the central controller 122. With reference to FIG. 1b, the adaptor 300 will be described in detail.

The adaptor 300 includes a communication controller 310 and an output voltage controller 320. The communication controller 310 receives a voltage change communication signal from the transmission controller 120 of the wireless power transmission device 100. The communication controller 310 receiving the voltage change communication signal filters and transmits the voltage change communication signal to the output voltage controller 320.

The output voltage controller 320 changes a DC voltage value, which is output to the wireless power transmission device 100, based on the voltage change communication signal. That is, the output voltage controller 320 increases or deceases the output DC voltage according to the voltage change communication signal such that the wireless power transmission device 100 transmits a proper power signal.

As described above, when the output voltage from the adaptor is controlled directly by the wireless power transmission device, a manufacturing cost may be decreased by reducing the number of components and a wireless power transmission efficiency may be increased.

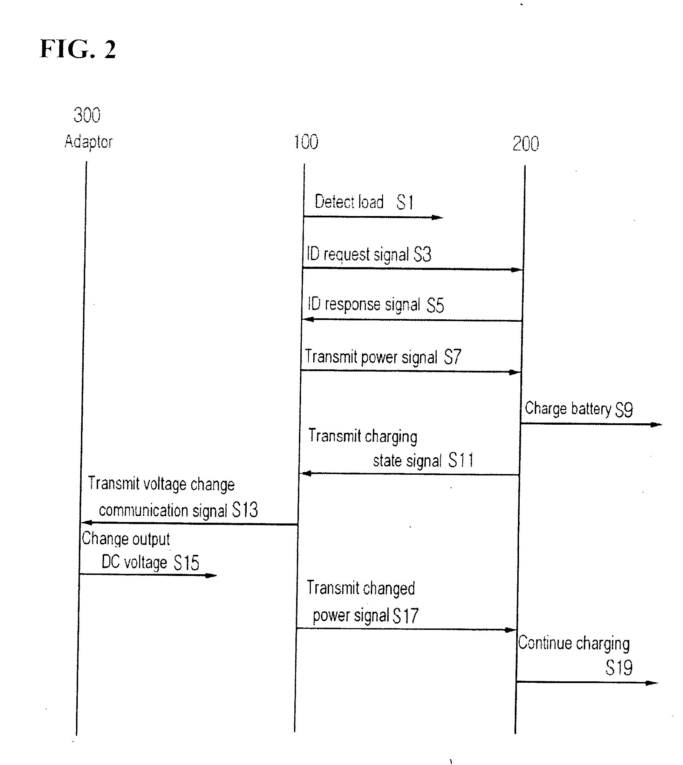

A power control method in a wireless power transmission system according to an exemplary embodiment of the present document having the above-mentioned configuration will be described in detail with reference to FIG. 2.

FIG. 2 is a flowchart describing the power control method in the wireless power transmission assembly according to an exemplary embodiment.

As shown in FIG. 2, when a foreign object is placed on a charging position where the transmission coil 110 of the wireless power transmission device 100 is located, a load change of the transmission coil 110 is detected and an ID request signal is transmitted at steps S1 and S3. If the foreign object is the wireless power receiving device 200, the wireless power receiving device 200 transmits an ID response signal for the ID request signal to the wireless power transmission device 100 at step S5. Accordingly, the wireless power transmission device 100 receiving the ID response signal confirms that the foreign object is the wireless power receiving device 200 and transmits a wireless power signal via the transmission coil 110 at step 87. When there are two transmission coils, the transmission controller 120 checks at which one of the two transmission coils the wireless power receiving device 200 is placed and transmits the wireless power signal via the checked coil. To be specific, after transmitting the ID request signal alternatively to the two transmission coils, a coil receiving an ID check signal is recognized as the checked coil.

The wireless power receiving device 200 receiving the wireless power signal rectifies the wireless power signal via the rectifier 220 and charges a battery with the rectified power at step S9.

When the battery is charged, the wireless power receiving device 200 transmits a charging state signal including a charging voltage information and a batters charging state information to the wireless power transmission device 100 via the reception coil 210 of the wireless power receiving device at step S11. Based on the charging state signal, the wireless power transmission device 100 transmits a voltage change communication signal to the adaptor 300. The voltage change communication signal may be any one of a power-up signal, a power-down signal, a full charging signal, and a charging error signal based on the charging state signal in the wireless power receiving device 200.

Accordingly, when the wireless power signal needs to be changed, the wireless power transmission device 100 transmits a voltage change communication signal to the adaptor 300 at step S13. At this time, the voltage change communication signal may be transmitted via a communication line or a plus line. It will be described below.

The adaptor 300 receiving the voltage change communication signal increases or decreases an output voltage by changing a voltage offset at step S15. Accordingly, the wireless power transmission signal is changed and prosper charging continues at steps S17 and S19.

According to an exemplary embodiment of the present document having the above-mentioned configuration, when the output voltage from the adaptor is controlled directly by the wireless power transmission device, a manufacturing cost may be decreased by reducing the number of components, and a wireless power transmission efficiency may be increased.

Hereinafter, a connection relation of the adaptor and the wireless power transmission device of the wireless power assembly according to an exemplary embodiment will be described in detail with reference to FIG. 3.

FIG. 3a and 3b are views showing the connection relation of the adaptor and the wireless power transmission device of the wireless power assembly according to an exemplary embodiment.

FIG. . 3a shows that the adaptor 300 and the wireless power transmission device 100 are connected 3 lines. As shown in FIG. 3a, the adaptor 300 and the wireless power transmission device 100 are connected via a plus line 401, a ground line 402 and a communication line 403. The transmission controller 120 of the wireless power transmission device 100 transmits an amplitude modulation signal as a voltage change communication signal to the adaptor 300 via the communication line 403. Otherwise, the voltage change communication signal as an one-wired serial communication signal may be transmitted via the communication line 403. A size of the output voltage is changed by controlling the voltage offset of the adaptor 300 receiving the amplitude modulation signal or the serial communication signal.

FIG. 3b shows that the adaptor 300 and the wireless power transmission device 100 are connected via 2 lines. At shown in FIG. 3b, the adaptor 300 and the wireless power transmission device 100 are connected via the plus line 401 and the ground line 402. In this case, the transmission controller 120 of the wireless power transmission device 100 transmits a voltage increasing request signal or a voltage decreasing request signal as a voltage change signal through the plus line 401 in a way of DOC modulation. Subsequently, the communication controller 310 of the adaptor 300 receiving the request signal analyzes the signal and the output voltage controller 310 changes the size of the output voltage.

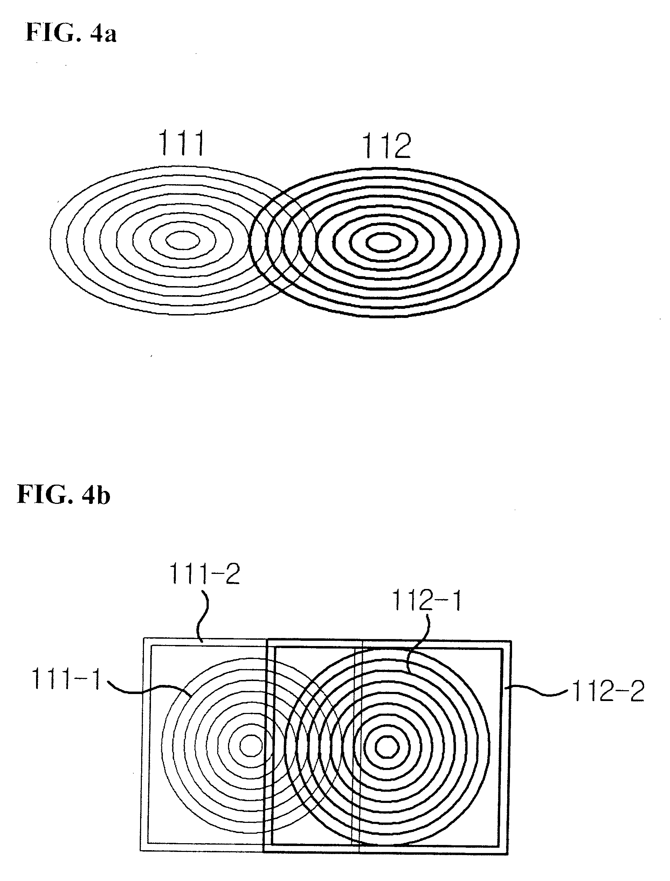

Hereinafter, examples of the plurality of transmission coils will be described in detail with reference to FIG. 4.

FIGS. 4a and 4b are views showing a structure of the plurality of coils used in the wireless power transmission device according to an exemplary embodiment.

As shown in FIG. 4a, in the wireless power transmission device 100 having the plurality of coils, the first transmission coil 111 and the second transmission coil 112 may have the same shape and size. The first transmission coil 111 and the second transmission coil 112 have an overlapped legion As shown in FIG. 4a, the first transmission coil 111 and the second transmission coil 112 may be an oval coil.

As shown in FIG. 4b, each of the first and second transmission coils 111 and 112 may have a shape that a circular coil and a square coil are combined. That is, as shown, in the first transmission coil 111 and the second transmission coil 112, circular coils 111-1 and 112-1 are formed at an inner side square coils 111-2 and 112-2 are formed at an outer side of the circular coils 111-1 and 112-1.

Since the transmission coil of FIG. 4b have power transmission efficiency as an advantage of the circular coil and mobility as an advantage of the square coil, it is possible to reduce a dead zone as a region that the wireless power receiving device 200 cannot receive power and maintain the power transmission efficiency at the same time.

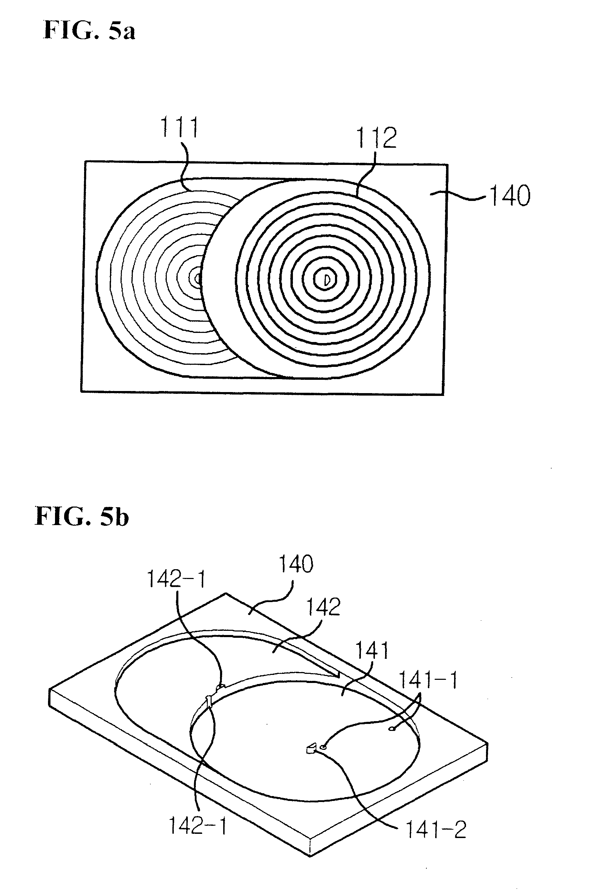

Hereinafter, a shield core for transmission, into which the oval coil used in FIG. 4a is inserted, will be described in detail with reference to FIG. 5.

FIG. 5a is a plan view showing a shield core accommodating a plurality of coils used in the wireless powder transmission device according to an exemplary embodiment. FIG. 5b is a perspective view showing the shield core accommodating the plurality of coils used in the wireless power transmission device according to another exemplary embodiment. As shown, a shield core 140 a flat square plate shape and includes a first concave portion 141 for inserting the first transmission coil 111 and a second concave portion 142 for inserting the second transmission coil 112. As shown, a step difference is formed between the first concave portion 141 and the second concave portion 142. Halls 141-1 and 142-1 for inserting a lead line are formed at a side surface and a center of each concave portion. Fixing portions 141-2 and 142-2 for fixing the transmission coil, i.e., protruded portions, are formed at a each center of the concave portions 141 and 142. The shield core may include any one of ferrite series of an amorphous system, Mn - Zn (50 parts by weight: 50 parts by weight) Ni-Fe (80 parts by weight:20 parts by weight), or Fine-metal (Fe - Si- Cu - Nb).

The above-mentioned shield core prevents that the controller of the wireless power transmission device is damaged by a magnetic field generated from the first transmission coil 111 and the second transmission coil 112 and increases power transmission efficiency.

According to an exemplary embodiment of the present document, when the output voltage from the adaptor is controlled directly by the wireless power transmission device, a manufacturing cost may be decreased by reducing the number of components and the wireless power transmission efficiency may be increased.

It will be apparent to those skilled in the art that the power control method in the wireless power transmission assembly and the wireless power transmission assembly may not be limitedly applied by the constitution and the method of the above-mentioned exemplary embodiments. All or the part of the exemplary embodiments may be selectively combined and configured to realize diverse modifications.

## Claims

1. A method for controlling a power in a wireless power transmission assembly, the method comprising:
outputting a direct current voltage to wireless power transmission apparatus (100), the direct current voltage generated from an alternative power source in an adaptor (300); wherein the adaptor (300) and the wireless power transmission apparatus (100) are connected by a plus line (401), a ground line (402), and a communication line (403), and
**characterized by** further comprising: changing the size of the direct current voltage output by the adaptor (300) to the wireless power transmission apparatus (100) based on a voltage change communication signal, if the wireless power transmission apparatus (100) transmits the voltage change communication signal to the adaptor (300), wherein the voltage change communication signal is based on a charging state signal from a wireless power receiving apparatus (200), and the step of changing the size of the direct current voltage in the adaptor (300) based on a voltage change communication signal of the wireless power transmission apparatus (100) transmits the voltage change communication signal to the adaptor (300), comprises:
changing the size of the direct current voltage in the adaptor (300) based on an amplitude modulation signal or a serial communication signal, the amplitude modulation signal or the serial communication signal transmitted through the communication line (403).

2. The method of claim 1, wherein the voltage change communication signal comprises at least one of a power up signal and a power down signal based on a charging state signal from a wireless power receiving apparatus (200).

3. The method of claim 2, wherein the wireless power transmission apparatus (100) comprises a first transmission coil (111) and a second transmission coil (112), and the method further comprises:
detecting a wireless power receiving apparatus (200) through anyone of the first transmission coil (111) and the second transmission coil (112); and
transmitting the voltage change communication signal through the detecting transmission coil.

4. A method for controlling a power in a wireless power transmission assembly, the method comprising:
outputting a direct current voltage to wireless power transmission apparatus (100), the direct current voltage generated from an alternative power source in an adaptor (300); wherein the adaptor (300) and the wireless power transmission apparatus (100) are connected by a plus line (401) and a ground line (402), and
**characterized by** further comprising: changing the size of the direct current voltage output by the adaptor (300) to the wireless power transmission apparatus (100) based on a voltage change communication signal, if the wireless power transmission apparatus (100) transmits the voltage change communication signal to the adaptor (300), wherein the voltage change communication signal is based on a charging state signal from a wireless power receiving apparatus (200), and the step of changing the size of the direct current voltage in the adaptor (300) based a voltage change communication signal if the wireless power transmission apparatus (100) transmits the voltage change communication signal to the adaptor (300), comprises;
transmitting a voltage up signal or a voltage down signal through the plus line (401) in a way of DC modulation.

5. The method of claim 1, wherein the step of changing the size of the direct current voltage in the adaptor (300) based a voltage change communication signal if the wireless power transmission apparatus (100) transmits the voltage change communication signal to the adaptor (300), comprises;
changing the size of the direct current voltage by adjusting an offset voltage of the adaptor (300).

6. A wireless power transmission assembly, comprising; an adaptor (300) configured to change an alternative current power source to a direct current voltage and to output the direct current voltage; and
a wireless power transmission apparatus (100) configured to transmit a wireless power signal by using the direct current voltage outputted from the adaptor (300), wherein the adaptor (300) and the wireless power transmission apparatus (100) are connected by a plus line (401), a ground line (402), and a communication line (403),
**characterized in that** a transmission controller of the wireless power transmission apparatus (100) is configured to transmit a voltage change communication signal to the adaptor (300), the voltage change communication transmitted from the wireless power transmission apparatus (100) connected to the adaptor (300), and to change the size of the direct current voltage output by the adaptor (300) to the wireless power transmission apparatus (100) based on a voltage change communication signal, the voltage change communication signal being based on a charging state signal from a wireless power receiving apparatus (200),
and the transmission controller is configured to transmit an amplitude modulation signal or a serial communication signal transmitted through the communication line (403), and to change the size of the direct current voltage in the adaptor (300) based on the amplitude modulation signal or the serial communication signal.

7. The assembly of claim 6, wherein the adaptor (300) comprises:
a communication controller configured to receive the voltage change communication signal; and
an output voltage controller configured to control the direct voltage by receiving the voltage change communication signal from the communication controller,

8. The assembly of claim 7, wherein the voltage change communication signal comprises at least one of a power up signal and a power down signal based on a charging state signal from a wireless power receiving apparatus (200).

9. The assembly of claim 6, wherein the wireless power transmission apparatus (100) comprises a first transmission coil (111) and a second transmission coil (112), and the transmission controller is configured to detect a wireless power receiving apparatus (200) through anyone of the first transmission coil (111) and the second transmission coil (112), and to transmit the voltage change communication signal through the detecting transmission coil.

10. The assembly of claim 9, wherein the transmission controller is configured to detect the wireless power receiving apparatus (200) through the load modulation of the first transmission coil (111) and the second transmission coil (112).

11. The assembly of claim 6, wherein the transmission controller changes the size of the direct current voltage by adjusting an offset voltage of the.adaptor (300).

12. A wireless power transmission assembly, comprising; an adaptor (300) configured to change an alternative current power source to a direct current voltage and to output the direct current voltage; and
a wireless power transmission apparatus (100) configured to transmit a wireless power signal by using the direct current voltage outputted from the adaptor (300), wherein the adaptor (300) and the wireless power transmission apparatus (100) are connected by a plus line (401) and a ground line (402),
**characterized in that** a transmission controller of the wireless power transmission apparatus (100) is configured to transmit a voltage change communication signal to the adaptor (300), the voltage change communication transmitted from the wireless power transmission apparatus (100) connected to the adaptor (300), and to change the size of the direct current voltage output by the adaptor (300) to the wireless power transmission apparatus (100) based on a voltage change communication signal, the voltage change communication signal being based on a charging state signal from a wireless power receiving apparatus (200),
and the transmission controller is configured to transmit a voltage up signal or a voltage down signal through the plus line (401) in a way of DC modulation.

## Patentansprüche

1. Verfahren zum Steuern einer Leistung in einer drahtlosen Leistungsübertragungsanordnung, wobei das Verfahren aufweist:
Ausgeben einer Gleichspannung an eine drahtlose Leistungsübertragungsvorrichtung (100), wobei die Gleichspannung aus einer Wechselstrom-Leistungsquelle in einem Adapter (300) erzeugt wird;
wobei der Adapter (300) und die drahtlose Leistungsübertragungsvorrichtung (100) durch eine Plus-Leitung (401), eine Masseleitung (402) und eine Kommunikationsleitung (403) verbunden sind, und
**dadurch gekennzeichnet ist, dass** es ferner aufweist: Ändern der Größe der durch den Adapter (300) an die drahtlose Leistungsübertragungsvorrichtung (100) ausgegebenen Gleichspannung auf der Grundlage eines Spannungsänderungskommunikationssignals, wenn die drahtlose Leistungsübertragungsvorrichtung (100) das Spannungsänderungskommunikationssignal an den Adapter (300) überträgt, wobei das Spannungsänderungskommunikationssignal auf einem Ladezustandssignal von einer drahtlosen Leistungsaufnahmevorrichtung (200) basiert,
und der Schritt des Änderns der Größe der Gleichspannung in dem Adapter (300) auf der Grundlage eines Spannungsänderungskommunikationssignals, wenn die drahtlose Leistungsübertragungsvorrichtung (100) das Spannungsänderungskommunikationssignal an den Adapter (300) überträgt, aufweist:
Ändern der Größe der Gleichspannung in dem Adapter (300) auf der Grundlage eines Amplitudenmodulationssignals oder eines seriellen Kommunikationssignals, wobei das Amplitudenmodulationssignal oder das serielle Kommunikationssignal durch die Kommunikationsleitung (403) übertragen wird.

2. Verfahren gemäß Anspruch 1, wobei das Spannungsänderungskommunikationssignal wenigstens eines eines Leistungserhöhungssignals und eines Leistungsverringerungssignals auf der Grundlage eines Ladezustandssignals von einer drahtlosen Leistungsaufnahmevorrichtung (200) aufweist.

3. Verfahren gemäß Anspruch 2, wobei die drahtlose Leistungsübertragungsvorrichtung (100) eine erste Übertragungsspule (111) und eine zweite Übertragungsspule (112) aufweist und das Verfahren ferner aufweist:
Erfassen einer drahtlosen Leistungsaufnahmevorrichtung (200) durch eine der ersten Übertragungsspule (111) und der zweiten Übertragungsspule (112); und
Übertragen des Spannungsänderungskommunikationssignals durch die erfassende Übertragungsspule.

4. Verfahren zum Steuern einer Leistung in einer drahtlosen Leistungsübertragungsanordnung, wobei das Verfahren aufweist:
Ausgeben einer Gleichspannung an eine drahtlose Leistungsübertragungsvorrichtung (100), wobei die Gleichspannung aus einer alternativen Leistungsquelle in einem Adapter (300) erzeugt wird;
wobei der Adapter (300) und die drahtlose Leistungsübertragungsvorrichtung (100) durch eine Plus-Leitung (401) und eine Masseleitung (402) verbunden sind, und
**dadurch gekennzeichnet ist, dass** es ferner aufweist: Ändern der Größe der durch den Adapter (300) an die drahtlose Leistungsübertragungsvorrichtung (100) übertragenen Gleichspannung auf der Grundlage eines Spannungsänderungskommunikationssignals, wenn die drahtlose Leistungsübertragungsvorrichtung (100) das Spannungsänderungskommunikationssignal an den Adapter (300) überträgt, wobei
das Spannungsänderungskommunikationssignal auf einem Ladezustandssignal von einer drahtlosen Leistungsaufnahmevorrichtung (200) basiert, und der Schritt
des Änderns der Größe der Gleichspannung in dem Adapter (300) auf der Grundlage eines Spannungsänderungskommunikationssignals, wenn die drahtlose Leistungsübertragungsvorrichtung (100) das Spannungsänderungskommunikationssignal an den Adapter (300) überträgt, aufweist;
Übertragen eines Spannungserhöhungssignals oder eines Spannungsverringerungssignals durch die Plus-Leitung (401) im Wege einer DC-Modulation.

5. Verfahren gemäß Anspruch 1, wobei der Schritt des Änderns der Größe der Gleichspannung in dem Adapter (300) auf der Grundlage eines Spannungsänderungskommunikationssignals, wenn die drahtlose Leistungsübertragungsvorrichtung (100) das Spannungsänderungskommunikationssignal an den Adapter (300) überträgt, aufweist;
Ändern der Größe der Gleichspannung durch Einstellen einer Offset-Spannung des Adapters (300).

6. Drahtlose Leistungsübertragungsanordnung, welche aufweist:
einen Adapter (300), welcher konfiguriert ist, um eine Wechselstrom-Leistungsquelle in eine Gleichspannung zu ändern und die Gleichspannung auszugeben; und
eine drahtlose Leistungsübertragungsvorrichtung (100), welche konfiguriert ist, um ein drahtloses Leistungssignal durch Verwenden der von dem Adapter (300) ausgegebenen Gleichspannung zu übertragen,
wobei der Adapter (300) und die drahtlose Leistungsübertragungsvorrichtung (100) durch eine Plus-Leitung (401), eine Masseleitung (402) und eine Kommunikationsleitung (403) verbunden sind,
**dadurch gekennzeichnet, dass** ein Übertragungssteuergerät der drahtlosen Leistungsübertragungsvorrichtung (100) konfiguriert ist, um ein Spannungsänderungskommunikationssignal an den Adapter (300) zu übertragen,
wobei die Spannungsänderungskommunikation von der mit dem Adapter (300) verbundenen drahtlosen Leistungsübertragungsvorrichtung (100) aus übertragen wird, und um die Größe der durch den Adapter (300) an die drahtlose Leistungsübertragungsvorrichtung (100) ausgegebenen Gleichspannung auf der Grundlage eines Spannungsänderungskommunikationssignals zu ändern, wobei das Spannungsänderungskommunikationssignal auf einem Ladezustandssignal von einer drahtlosen Leistungsaufnahmevorrichtung (200) basiert,
und das Übertragungssteuergerät konfiguriert ist, um ein Amplitudenmodulationssignal oder ein serielles Kommunikationssignal, welches durch die Kommunikationsleitung (403) übertragen wird, zu übertragen und um die Größe der Gleichspannung in dem Adapter (300) auf der Grundlage des Amplitudenmodulationssignals oder des seriellen Kommunikationssignals zu ändern.

7. Anordnung gemäß Anspruch 6, wobei der Adapter (300) aufweist:
ein Kommunikationssteuergerät, welches konfiguriert ist, um das Spannungsänderungskommunikationssignal zu empfangen; und
ein Ausgangsspannungssteuergerät, welches konfiguriert ist, um die Gleichspannung durch Empfangen des Spannungsänderungskommunikationssignals von dem Kommunikationssteuergerät zu steuern.

8. Anordnung gemäß Anspruch 7, wobei das Spannungsänderungskommunikationssignal wenigstens eines eines Leistungserhöhungssignals und eines Leistungsverringerungssignals auf der Grundlage eines Ladezustandssignals von einer drahtlosen Leistungsaufnahmevorrichtung (200) aufweist.

9. Anordnung gemäß Anspruch 6, wobei die drahtlose Leistungsübertragungsvorrichtung (100) eine erste Übertragungsspule (111) und eine zweite Übertragungsspule (112) aufweist und das Übertragungssteuergerät konfiguriert ist, um eine drahtlose Leistungsaufnahmevorrichtung (200) durch eine der ersten Übertragungsspule (111) und der zweiten Übertragungsspule (112) zu erfassen und um das Spannungsänderungskommunikationssignal durch die erfassende Übertragungsspule zu übertragen.

10. Anordnung gemäß Anspruch 9, wobei das Übertragungssteuergerät konfiguriert ist, um die drahtlose Leistungsaufnahmevorrichtung (200) durch die Lastmodulation der ersten Übertragungsspule (111) und der zweiten Übertragungsspule (112) zu erfassen.

11. Anordnung gemäß Anspruch 6, wobei das Übertragungssteuergerät die Größe der Gleichspannung durch Einstellen einer Offset-Spannung des Adapters (300) ändert.

12. Drahtlose Leistungsübertragungsanordnung, welche aufweist:
einen Adapter (300), welcher konfiguriert ist, um eine Wechselstrom-Leistungsquelle in eine Gleichspannung zu ändern und um die Gleichspannung auszugeben; und
eine drahtlose Leistungsübertragungsvorrichtung (100), welche konfiguriert ist, um ein drahtloses Leistungssignal durch Verwenden der von dem Adapter (300) ausgegebenen Gleichspannung zu übertragen,
wobei der Adapter (300) und die drahtlose Leistungsübertragungsvorrichtung (100) durch eine Plus-Leitung (401) und eine Masseleitung (402) verbunden sind,
**dadurch gekennzeichnet, dass** ein Übertragungssteuergerät der drahtlosen Leistungsübertragungsvorrichtung (100) konfiguriert ist, um ein Spannungsänderungskommunikationssignal an den Adapter (300) zu übertragen, wobei die Spannungsänderungskommunikation von der mit dem Adapter (300) verbundenen drahtlosen Leistungsübertragungsvorrichtung (100) aus übertragen wird, und um die Größe der durch den Adapter (300) an die drahtlose Leistungsübertragungsvorrichtung (100) ausgegebenen Gleichspannung auf der Grundlage eines Spannungsänderungskommunikationssignals zu ändern, wobei das Spannungsänderungskommunikationssignal auf einem Ladezustandssignal von einer drahtlosen Leistungsaufnahmevorrichtung (200) basiert,
und das Übertragungssteuergerät konfiguriert ist, um ein Spannungserhöhungssignal oder ein Spannungserniedrigungssignal durch die Plus-Leitung (401) im Wege einer DC-Modulation zu übertragen.

## Revendications

1. Procédé destiné à réguler une puissance dans un ensemble de transmission de puissance sans fil, le procédé comportant l'étape consistant à :
délivrer en sortie une tension de courant continu à un appareil de transmission de puissance sans fil (100), la tension de courant continu étant générée à partir d'une source de puissance alternative dans un adaptateur (300), dans lequel l'adaptateur (300) et l'appareil de transmission de puissance sans fil (100) sont reliés par une ligne plus (401), une ligne de terre (402) et une ligne de communication (403), et
**caractérisé en ce qu'**il comporte en outre l'étape consistant à changer la taille de la tension de courant continu délivrée en sortie par l'adaptateur (300) à l'appareil de transmission de puissance sans fil (100) sur la base d'un signal de communication de changement de tension, si l'appareil de transmission de puissance sans fil (100) transmet le signal de communication de changement de tension à l'adaptateur (300), dans lequel le signal de communication de changement de tension est basé sur un signal d'état de charge provenant d'un appareil de réception de puissance sans fil (200), et l'étape de changement de la taille de la tension de courant continu dans l'adaptateur (300) sur la base d'un signal de communication de changement de tension si l'appareil de transmission de puissance sans fil (100) transmet le signal de communication de changement de tension à l'adaptateur (300), comporte l'étape consistant à :
changer la taille de la tension de courant continu dans l'adaptateur (300) sur la base d'un signal de modulation d'amplitude ou d'un signal de communication série, le signal de modulation d'amplitude ou le signal de communication série étant transmis via la ligne de communication (403).

2. Procédé selon' la revendication 1, dans lequel le signal de communication de changement de tension comporte au moins un signal parmi un signal de hausse de puissance et un signal de baisse de puissance basé sur un signal d'état de charge provenant d'un appareil de réception de puissance sans fil (200).

3. Procédé selon la revendication 2, dans lequel l'appareil de transmission de puissance sans fil. (100) comporte une première bobine de transmission (111) et une seconde bobine de transmission (112), et le procédé comporte en outre les étapes consistant à :
détecter un appareil de réception de puissance sans fil (200) par l'intermédiaire d'une bobine quelconque parmi la première bobine de transmission (111) et la seconde bobine de transmission (112), et
transmettre le signal de communication de changement de tension via la bobine de transmission en cours de détection.

4. Procédé pour réguler une puissance dans un ensemble de transmission de puissance sans fil, le procédé comportant l'étape consistant à :
délivrer en sortie une tension de courant continu à un appareil de transmission de puissance sans fil (100), la tension de courant continu étant générée à partir d'une source de puissance alternative dans un adaptateur (300), dans lequel l'adaptateur (300) et l'appareil de transmission de puissance sans fil (100) sont reliés par une ligne plus (401) et une ligne de terre (402), et
**caractérisé en ce qu'**il comporte en outre l'étape consistant à changer la taille de la tension de courant continu délivrée en sortie par l'adaptateur (300) à l'appareil de transmission de puissance sans fil (100) sur la base d'un signal de communication de changement de tension, si l'appareil de transmission de puissance sans fil (100) transmet le signal de communication de changement de tension à l'adaptateur (300), dans lequel le signal de communication de changement de tension est basé sur un signal d'état de charge provenant d'un appareil de réception de puissance sans fil (200), et l'étape de changement de la taille de la tension de courant continu dans l'adaptateur (300) sur la base d'un signal de communication de changement de tension si l'appareil de transmission de puissance sans fil (100) transmet le signal de communication de changement de tension à l'adaptateur (300), comporte l'étape consistant à:
transmettre un signal de hausse de tension ou un signal de baisse de tension via la ligne plus (401) à la manière d'une modulation DC.

5. Procédé selon la revendication 1, dans lequel l'étape de changement de la taille de la tension de courant continu dans l'adaptateur (300) sur la base d'un signal de communication de changement de tension si l'appareil de transmission de puissance sans fil (100) transmet le signal de communication de changement de tension à l'adaptateur (300), comporte l'étape consistant à :
changer la taille de la tension de courant continu en réglant une tension de décalage de l'adaptateur (300).

6. Ensemble de transmission de puissance sans fil, comportant :
un adaptateur (300) configuré pour changer une source de puissance à courant alternatif en une tension de courant continu et pour délivrer en sortie la tension de courant continu, et
un appareil de transmission de puissance sans fil (100) configuré pour transmettre un signal de puissance sans fil en utilisant la tension de courant continu délivrée en sortie à partir de l'adaptateur (300), dans lequel l'adaptateur (300) et l'appareil de transmission de puissance sans fil (100) sont reliés par une ligne plus (401), une ligne de terre (402) et une ligne de communication (403),
**caractérisé en ce qu'**un contrôleur de transmission de l'appareil de transmission de puissance sans fil (100) est configuré pour transmettre un signal de communication de changement de tension à l'adaptateur (300), le signal de communication de changement de tension étant transmis à partir de l'appareil de transmission de puissance sans fil (100) relié à l'adaptateur (300), et pour changer la taille de la tension de courant continu délivrée en sortie par l'adaptateur (300) à l'appareil de transmission de puissance sans fil (100) sur la base d'un signal de communication de changement de tension, le signal de communication de changement de tension étant basé sur un signal d'état de charge provenant d'un appareil de réception de puissance sans fil (200), et le contrôleur de transmission est configuré pour transmettre un signal de modulation d'amplitude ou un signal de communication série transmis via la ligne de communication (403), et pour changer la taille de la tension de courant continu dans l'adaptateur (300) sur la base du signal de modulation d'amplitude ou du signal de communication série.

7. Ensemble selon la revendication 6, dans lequel l'adaptateur (300) comporte :
un contrôleur de communication configuré pour recevoir le signal de communication de changement de tension, et
un contrôleur de tension de sortie configuré pour réguler la tension continue en recevant le signal de communication de changement de tension provenant du contrôleur de communication.

8. Ensemble selon la revendication 7, dans lequel le signal de communication de changement de tension comporte au moins un signal parmi un signal de hausse de puissance ou un signal de baisse de puissance basé sur un signal d'état de charge provenant d'un appareil de réception de puissance sans fil (200).

9. Ensemble selon la revendication 6, dans lequel l'appareil de transmission de puissance sans fil (100) comporte une première bobine de transmission (111) et une seconde bobine de transmission (112), et le contrôleur de transmission est configuré pour détecter un appareil de réception de puissance sans fil (200) par l'intermédiaire d'une bobine quelconque parmi la première bobine de transmission (111) et la seconde bobine de transmission (112), et pour transmettre le signal de communication de changement de tension via la bobine de transmission en cours de détection.

10. Ensemble selon la revendication 9, dans lequel le contrôleur de transmission est configuré pour détecter l'appareil de réception de puissance sans fil (200) via la modulation de charge de la première bobine de transmission (111) et de la seconde bobine de transmission (112).

11. Ensemble selon la revendication 6, dans lequel le contrôleur de transmission change la taille de la tension de courant continu en réglant une tension de décalage de l'adaptateur (300).

12. Ensemble de transmission de puissance sans fil, comportant :
un adaptateur (300) configuré pour changer une source de puissance à courant alternatif en une tension de courant continu et pour délivrer en sortie la tension de courant continu, et
un appareil de transmission de puissance sans fil (100) configuré pour transmettre un signal de puissance sans fil en utilisant la tension de courant continu délivrée en sortie à partir de l'adaptateur (300), dans lequel l'adaptateur (300) et l'appareil de transmission de puissance sans fil (100) sont reliés par une ligne plus (401) et une ligne de terre (402),
**caractérisé en ce qu'**un contrôleur de transmission de l'appareil de transmission de puissance sans fil (100) est configuré pour transmettre un signal de communication de changement de tension à l'adaptateur (300), le signal de communication de changement de tension étant transmis à partir de l'appareil de transmission de puissance sans fil (100) relié à l'adaptateur (300), et pour changer la taille de la tension de courant continu délivrée en sortie par l'adaptateur (300) à l'appareil de transmission de puissance sans fil (100) sur la base d'un signal de communication de changement de tension, le signal de communication de changement de tension étant basé sur un signal d'état de charge provenant d'un appareil de réception de puissance sans fil (200), et le contrôleur de transmission est configuré pour transmettre un signal de hausse de tension ou un signal de baisse tension via la ligne plus (401) à la manière d'une modulation DC.
